# EUROPEAN PATENT SPECIFICATION

(11) **EP 2 686 164 B1**
(45) Date of publication and mention of the grant of the patent: **27.04.2016**
(21) Application number: 11708256.0
(22) Date of filing: 15.03.2011
(51) Int. Cl.: B32B 3/28, D21H 27/40, B31F 1/07, B32B 29/08, B32B 38/06, B32B 3/26, D21H 27/00, D21H 27/30

(54) **FIBROUS PRODUCT AND METHOD FOR MANUFACTURING SUCH A FIBROUS PRODUCT**
FASERPRODUKT UND VERFAHREN ZUR HERSTELLUNG DESSELBEN
PRODUIT FIBREUX ET PROCÉDÉ POUR LA FABRICATION D'UN TEL PRODUIT FIBREUX

(43) Date of publication of application: 22.01.2014
(73) Proprietor: SCA Hygiene Products AB, 405 03 Göteborg (SE)
(72) Inventor: EILERT, Diana, 68239 Mannheim (DE); HARLACHER, Harald, 68307 Mannheim (DE); HEIN, Ferdinand, 68305 Mannheim (DE); ZÖLLER, Günther, 69198 Schriesheim (DE)
(74) Representative: Hoffmann Eitle
(86) International application number: PCT/EP2011/053846
(87) International publication number: WO 2012/123020

(56) References cited:
- WO-A1-99/44814
- WO-A1-2007/107167
- US-A1- 2003 026 953
- US-A1- 2009 056 860

## Description

### Field of the Invention

The invention relates to a fibrous product, especially tissue paper product, non-woven product or a hybrid thereof, and preferably hygiene and cleaning product. The invention also relates to a method for producing such a fibrous product.

### Background of the Invention and Prior Art

Hygiene or wiping products primarily include all kinds of dry-creped tissue paper, wet-creped paper, TAD-paper (Through Air Drying) and cellulose or pulp-wadding or all kinds of non-wovens, or combinations, laminates or mixtures thereof. Typical properties of these hygiene and wiping products include the reliability to absorb tensile stress energy, their drapability, good textile-like flexibility, properties which are frequently referred to as bulk softness, a higher surface softness and a high specific volume with a perceptible thickness. A liquid absorbency as high as possible and, depending on the application, a suitable wet and dry strength as well as an appealable visual appearance of the outer product's surface are desired. These properties, among others, allow these hygiene and wiping products to be used, for example, as cleaning wipes such as paper or non-woven wipes, windscreen cleaning wipes, industrial wipes, kitchen paper or the like; as sanitary products such as for example bathroom tissue, paper or non-woven handkerchiefs, household towels, towels and the like; as cosmetic wipes such as for example facials and as serviettes or napkins, just to mention some of the products that can be used. Furthermore, the hygiene and wiping products can be dry, moist, wet, printed or pretreated in any manner. In addition, the hygiene and wiping products may be folded, interleaved or individually placed, stacked or rolled, connected or not, in any suitable manner.

Due to the above description, the products can be used for personal and household use as well as commercial and industrial use. They are adapted to absorb fluids, remove dust, for decorative purposes, for wrapping or even just as supporting material, as is common for example in medical practices or in hospitals.

If tissue paper is to be made out of pulp, the process essentially comprises a forming that includes a box and a forming wire portion, and a drying portion (either through air drying or conventional drying on a yankee cylinder). The production process also usually includes the crepe process essential for tissues and, finally, typically a monitoring and winding area.

Paper can be formed by placing the fibers, in an oriented or random manner, on one or between two continuously revolving wires of a paper making machine while simultaneously removing the main quantity of water of dilution until dry-solids contents of usually between 12 and 35% are obtained.

Drying the formed primary fibrous web occurs in one or more steps by mechanical and thermal means until a final dry-solids content of usually about 93 to 97% has been reached. In case of tissue making, this stage is followed by the crepe process which crucially influences the properties of the finished tissue product in conventional processes. The conventional dry crepe process involves creping on a usually 4.0 to 6.5 m diameter drying cylinder, the so-called yankee cylinder, by means of a crepe doctor with the aforementioned final dry-solids content of the raw tissue paper. Wet creping can be used as well, if lower demands are made of the tissue quality. The creped, finally dry raw tissue paper, the so-called base tissue, is then available for further processing into the paper product for a tissue paper product.

Instead of the conventional tissue making process described above, the use of a modified technique is possible in which an improvement in specific volume is achieved by a special kind of drying which leads to an improvement in the bulk softness of the tissue paper. This process, which exists in a variety of subtypes, is termed the TAD (Through Air Drying) technique. It is characterized by the fact that the "primary" fibrous web that leaves the forming and sheet making stage is pre-dried to a dry-solids content of about 80% before final contact drying on the yankee cylinder by blowing hot air through the fibrous web. The fibrous web is supported by an air-permeable wire or belt or TAD-fabric and during its transport is guided over the surface of an air-permeable rotating cylinder drum, the so-called TAD-cylinder. Structuring the supporting wire or belt makes it possible to produce any pattern of compressed zones broken up by deformation in the moist state, also named moulding, resulting in increased mean specific volumes and consequently leading to an increase of bulk softness without decisively decreasing the strength of the fibrous web.

To produce multi-ply tissue paper products, such as handkerchiefs, bathroom paper, towels or household towels, an intermediate step often occurs with so-called doubling in which the base tissue in the desired number of plies is usually gathered on a common multi-ply mother reel.

The processing steps from the base tissue that has already been optionally wound up in several plies are used in processing machines (converting machines) which include operations such as unwinding the base tissue, repeated smoothing of the tissue, printing, embossing, to an extent combined with full area and/or local application of adhesive to produce ply adhesion of the individual plies to be combined together as well as longitudinal cut, folding, cross cut, placement and bringing together a plurality of individual tissues and their packaging as well as bringing them together to form larger surrounding packaging or bundles. Such processing steps may also include application of substances like scents, lotions, softeners or other chemical additives. The individual paper ply webs can also be pre-embossed and then combined in a nip of rolls according to the embossing methods known in the art. Any embossing can lead to embossed elements all having the same height or to embossing elements having different heights. Ply bonding, e.g. by mechanical or by chemical means are other well-known methods mainly used for hankies, napkins and bathroom tissues and household towels.

A well-known technique to increase the thickness of a paper product is to emboss the paper web. An embossing process is carried out in the nip between an embossing roll and an anvil roll. The embossing roll can have protrusions on its circumferential surface leading to so-called embossed depressions in the paper web or it can have depressions in its circumferential surface leading to so-called embossed protrusions in the paper web.

Anvil rolls may be softer than the corresponding embossing roll and may consist of rubber, such as natural rubber, or plastic materials, paper or steel.

For manufacturing multi-ply tissue products, especially bathroom tissue and household tissue, three main manufacturing methods for embossing and adhesively bonding of the plies have been established. These are Goffra Incolla/spot embossing, DESL (Double Embossing Single Lamination)/Nested, and Pin-to-Pin/Foot-to-Foot.

In the first mentioned manufacturing method, Goffra Incolla, a first web is directed through the nip between an embossing roll and an anvil roll. In this nip the web is provided with an embossing pattern. Thereafter, an application roll for adhesive applies adhesive to those parts of the first web at which there are protruding embossing elements in the embossing roll. The adhesive is transported from an adhesive bath via an adhesive transfer roll to the application roll. A second web is transported to the first web and adhesively bonded to the first web in the nip between the so-called marrying roll and the embossing roll. The adhesive bonding takes place at those portions at which the adhesive was applied.

The second manufacturing method (DESL/Nested) is very similar to the above-described Goffra Incolla method. It comprises an additional pair of rolls consisting of a second embossing roll and a second anvil roll. The additional pair of rolls serves to emboss the second web before it is adhesively bonded to the first web using the marrying roll. Typically, the additional pair of rolls is placed close to the first pair of rolls and the marrying roll. Especially when using the so-called Nested-method such close arrangement is important. The Nested-method can be considered as a special case of the general DESL-manufacturing method. For the Nested-method the embossing elements of the first embossing roll and the embossing elements of the second embossing roll are arranged such that the embossed elements of the first embossed ply and the embossed elements of the second embossed ply fit into each other similar to a gearing system. This serves to achieve a mutual stabilization of the two plies. However, for the DESL manufacturing method such correlation between the embossed elements of the first, upper ply and the second, lower ply, does not have to apply. Nevertheless, in a literature the term DESL is often used synonymous to a Nested-method.

The third manufacturing method (Pin-to-Pin/Foot-to-Foot) is similar to the DESL method. By means of two pairs of rolls both the upper ply and the lower ply are embossed, respectively. Adhesive is applied onto the embossed protrusions of the first ply. The ply bonding however, is not achieved by means of a marrying roll as in the DESL method but is achieved directly by means of the protruding embossing elements of the second embossing roll. In order to achieve this, an exact adjustment of the width of the gap between the first embossing roll and the second embossing roll is required, which is mainly defined by the individual thickness of both webs (upper ply and lower ply). Further, the embossing rolls have to be designed such that at least some of the protruding embossing elements of both rolls face each other. This is the reason why the terminology Pin-to-Pin or Foot-to-Foot embossing is used.

All above described methods have the following common features: the first embossing roll is formed of a hard material, usually metal, especially steel, but there are also known embossing rolls made of hard rubber or hard plastics materials. The embossing rolls can be a male roll having individual protrusions. Alternatively, the embossing roll can be a female roll with individual embossing depressions. Typical depths of the engraved embossing patterns are between 0.4mm and 2.0mm.

The anvil roll typically has a rubber coating. However, structurized anvil rolls, especially rolls made of paper, rubber or plastics materials or steel are also known.

The applicator roll for adhesive is usually also a rubber roll with a plain smooth circumferential surface, wherein the hardness of the rubber coating is between the hardness of the anvil roll and the hardness of the marrying roll. Commonly used values for the hardness of the rubber coating are 70 to 85 Shore A. When selecting the rubber material its compatibility with the adhesive to be applied has to be ensured.

The application system for adhesive consisting of applicator roll, adhesive transfer roll and adhesive bath can be designed as a so-called immersion roll system in which the adhesive transfer roll is immersed into the adhesive bath and transports adhesive by means of surface tension and adhesive forces out of the adhesive bath. By adjusting the gap between the adhesive transfer roll and the applicator or application roll, the amount of adhesive to be applied can be adjusted. Application rolls may be structured rolls. Further, adhesive transfer rolls have become known having defined pit-shaped depressions in their circumferential surface. Such adhesive transfer rolls are known as anilox-rolls. Such roll is usually made of ceramic material or it is a roll made of steel or copper and coated with chromium. Excessive adhesive is removed from the surface of the anilox-roll by means of a blade. The amount of adhesive is determined by the volume and the number of depressions. Alternative application systems for applying adhesives are based on a spraying equipment.

A second possibility to influence the amount of adhesive transferred is the adjustment of the difference in circumferential speeds of the adhesive transfer roll and the applicator roll. Typically, the adhesive transfer roll rotates slower than the applicator roll. The circumferential speed of the adhesive transfer roll is usually between 5% and 100% of the first circumferential speed of the applicator roll. The adhesive bath can be designed as a simple trough, application systems with a blade can also be designed as chamber systems.

The embossing technologies Goffra Incolla/spot embossing and DESL/Nested, both use an additional roll, the so-called marrying roll for laminating together the plies. The marrying roll commonly has a smooth rubber surface with a hardness of about 80-98 Shore A. A suitable material is e.g. NBR (acrylnitrile-butadien rubber). However, marrying rolls also have become known which, in addition to the rubber coating, are provided with a steel coating. Such steel coating is often provided in form of a steel band spirally wound onto the rubber coating as described in WO2004/065113.

In case that the single layers individually or together are pre-embossed, a so-called micro-pre-embossing device is used. Such pre-embossing device is often used in combination with the Goffra Incolla technology. Also commonly used is a printing onto the tissue product before or after the ply bonding step. Also known are variants including the application of chemical substances, especially lotions and softeners.

Another well-known embossing technique comprises a steel embossing roll and a corresponding anvil steel roll (so-called Matched Steel Embossing) or a steel roll and a corresponding flat anvil steel roll (so-called pin to flat) or a steel roll and a corresponding anvil rubber roll with embedded steel elements e.g. in a spiral shape.

When using one of the above described three embossing methods also for a pin-to-pin technique it is advantageous to provide a control for the tension of the web both before and after the ply bonding because the physical properties of the web and especially the stress-strain characteristic can be changed significantly in the embossing step.

The embossing not only serves to provide bulk to the fibrous product but also to provide an improved optical appearance to the product. The optical appearance of a product is important for consumer products and also serves to provide a higher degree of recognition to the product. The optical appearance can be improved by combining embossing and coloring steps. Another reason for embossing is to generate higher absorbency or improved perceived softness.

When using the nested mode, a multi-ply sheet with a stable thickness is obtained, because the bottom embossing matches to the top embossing and stabilizes the whole sheet. The drawback of the nested configuration, however, is smaller handfeel levels compared to other embossing configurations. When using Goffra Incolla, the same applies receive separately micro-pre-embossing before the plies are embossed and laminated spot wise, with decorative elements. Decoration embossing (Goffra Incolla) can lead to good handfeel levels but the sheets do not look or feel bulky.

In an attempt to generate a product with a high perceived volume, WO 02/103112 A1 suggests a three-ply tissue paper product with a micro-embossed top ply, a micro-embossed bottom ply and a middle ply sandwiched between the top ply and the bottom ply and being provided with a macro-embossed pattern. All three plies are ply bonded together after the top ply, the bottom ply and the middle ply have been structured separately. Hence, the outer plies and the middle ply are ply bonded together in a non-registered manner.

WO 2006/136186 A1 describes a multi-ply web of tissue paper wherein a first ply is provided with an embossing pattern forming cushions limited by regions of compressed material. The second web is provided with a second embossing pattern with protrusions of compressed material. The first web and the second web are combined together such that the protrusions of compressed material of the second web are positioned inside the cushions of the first web. This serves to provide multi-ply tissue paper with high absorption, softeness and bulk thickness to provide a good feeling to the user.

### Summary of the Invention

It is the object of the invention to provide a mechanically strong, three dimensional fibrous product with a good hand feel, an improved bulk and an enhanced optical appearance. It is further the object of the invention to provide a suitable method for producing such a fibrous product.

This object is solved by a fibrous product with the features of claim 1 and a method for producing an inventive fibrous product with the features of claim 12. Preferred embodiments follow from the further claims.

The inventive fibrous product is especially a tissue paper product, non-woven product or a hybrid thereof, and preferably a hygiene and cleaning product. The inventive fibrous product comprises at least one top ply, at least one middle ply and at least one bottom ply. The term "at least one" should indicate that top ply, middle ply and bottom ply can in themselves be a multi-ply structure, respectively. However, if e.g. a double-ply bottom ply is used, such plies are not processed separately when embossing and bonding together the inventive fibrous product. In the following description, when reference is made to the top ply, the middle ply or the bottom ply, this includes the above-described option that these plies are made up of more than one fibrous ply.

According to the invention the top ply is provided with an embossing pattern and the middle ply is embossed in register with the top ply so that second embossing protuberances of the middle ply nest into pillow-like chambers between first embossing protuberances of the top ply. This creates a nested structure of top ply and middle ply. The second embossing protuberances of the middle ply need not to be shaped such as to fill to a large extent the pillow-like chamber of the top ply. The inventive product is further provided with a bottom ply which is bonded to both the top ply and the middle ply. This bottom ply is also in register with the top ply and middle ply and closes the pillow-like chambers of the top ply to form closed cushions in the product.

Such fibrous product optimizes bulk and three dimensional optics but still has a high level of handfeel. Unlike nested configurations in the prior art, it is not the bottom ply which nests into the top ply, but a middle ply. The at least one bottom ply comprises non-embossed areas and embossed areas whereby the non-embossed areas are in register with the top ply and the middle ply. Preferably the fibrous products are unembossed at the bonding regions at which the at least one bottom ply is bonded to both the at least one top ply and the at least one middle ply. At the bonding regions at which ply bonding is realized, the optical appearance of an embossed pattern can be of inferior quality. However, if such bonding regions are placed in the non-embossed areas of the at least one bottom ply, a high optical quality of the product can be maintained. The provision of non-embossed areas has further advantages. Such non-embossed areas might be shaped according to a desired motive pattern and could even be used to reflect the design on the at least one top ply down to the bottom ply. In other words, the embossed pattern of the top ply could essentially correspond to the non-embossed areas of the bottom ply. A further advantage is the increased softness of the product depending on the fraction of non-embossed areas relative to the embossed areas. The higher the fraction of non-embossed areas is, the higher is the perceived softness of the bottom side of the product. In order to increase the visibility of the non-embossed areas, the at least one bottom ply is preferably not made from TAD-paper, although this is technically not excluded. Further, the bottom ply is in register with the nested structure consisting of top ply and middle ply so that the proper orientation of the pattern of non-embossed areas relative to the embossing of the middle ply and the top ply is realized. This serves to create a good optical appearance of the product. A further advantage of the product is its reversibility or two-sidedness, which means that both sides can be made clearly different in view of their embossing pattern and can independently be either the top ply or the bottom ply. Therefore, as used in this specification, the terms "top ply" and "bottom ply" only serve to define the product as such without limiting the product with regard to the direction in which it can be wound up to a roll or which side is used by a user. In that respect, the top ply can be structured with relatively large pillow-like chambers delimited by embossing protuberances to increase its absorbency whereas a bottom layer with only small embossing protuberances might be suitable for polishing purposes.

Preferably, the embossed areas of the at least one bottom ply can be provided with a micro-embossing pattern or any other kind of a conventional pre-embossing pattern.

Preferably, the non-embossed areas are of an elongate shape having a width between 0.1 and 30mm, preferably between 0.1 and 20mm and most preferably between 0.1 and 15mm. The elongate shape may be a linear shape. When non-embossed areas have such an elongate shape, it is possible to form a negative picture of the first embossing protuberances on the top surface. In other words, where the embossing protuberances on the top ply are, there can be unembossed areas in the bottom ply. This makes it possible to reflect the motive elements embossed in the top ply onto the bottom surface.

In addition to registering the non-embossed areas to the top ply and the middle ply, preferably at the bonding regions, a preferred embodiment of the inventive fibrous product uses a bottom ply further comprising one or more second non-embossed areas. The second non-embossed areas can be freely selected according to functional and aesthetic characteristics. The aesthetic characteristics follow from the position and shape of the second non-embossed areas, whereas the functional characteristics are closely related to the increased softness of the product in the non-embossed areas which can be arranged and sized so as to arrive at a desired perceived overall softness.

Preferably, the ratio between the non-embossed areas including the second non-embossed areas and the embossed areas ranges of the bottom ply between 5% and 70%, preferably between 10% and 60%, especially 15% to 50% for the non-embossed areas and 30% to 95%, preferably 40% to 95% and especially 50% to 85% for the embossed areas. Such ranges lead to a good functional behaviour of the product without compromising the desired appealing optical effect.

According to a preferred embodiment, the at least one bottom ply is a two-ply structure and both bottom plies are bonded together by means of mechanical ply bonding, e.g. by edge-embossing or by knurling which provides a local ply bonding of the bottom plies. Ply-bonding can also be achieved by lamination using adhesives, e.g. hot melts, or by using process such as nested or spot-embossing techniques.

According to a preferred embodiment of the invention, the top ply, the middle ply and the bottom ply are adhesively bonded together at the bonding regions which are the common bonding positions. In order to achieve this, the wickability of the fibrous product sheets can be used so that the adhesive is applied to one side of the middle ply and penetrates through the middle ply so that one specific spot can used to bond together all three plies. If the top ply, the middle ply or the bottom ply are provided with more than one ply, the same basic principle applies.

According to preferred embodiment, the first embossing protuberances of the at least one top ply comprise linear or dotted protuberances essentially delimiting pillow-like chambers with a surface area between 0.2cm² and 3cm², preferably between 0.25cm² and 2cm² and most preferably between 0.3cm² and 1cm². This embossing pattern forms cushions which are surrounded by regions of compressed material. The term "linear protuberances" should indicate that such protuberances have an elongated shape, especially are straight or curved lines. Such an elongated shape has a width of from 0.1 to 10mm, preferably from 0.1 to 6mm and most preferably from 0.1 to 4mm, and the width may vary along the elongation. The provision of such linear protuberances has the advantage that the cushions formed by the pillow-like chambers are surrounded by compressed zones, the area of which can be minimized. Such linear protuberances can fully circumvent the pillow-like chambers, however, it is preferred to provide linear protuberances which do not fully surround each pillow-like chamber. The term "dotted protuberances" should indicate that such protuberances have a shape of interrupted lines or a shape of small individual points or spots. This measure is advantageous in order to maintain the softeness of the product and has the further technical effect that during embossing, trapped air can escape.

Alternatively, the regions of compressed material can also have the shape of individual dots positioned in linear arrangements. As a further alternative, the regions of compressed material could form individual elongated sections being positioned together to form the appearance of dashed lines.

According to a preferred embodiment of the invention, the pillow-like chambers of the at least one top ply are stabilized by at least one second protuberance of the at least one middle ply, the second protuberances having a cross-sectional area at their top of between 0.2cm² and 0.8cm². If relatively large pillow-like chambers are provided, the protuberances of the middle ply nesting into the pillow-like chambers of the top ply serve to stabilize the pillow-like chambers. Pillow-like chambers of a big size tend to collapse and lose shape when rolling the web. Therefore, in order to keep the desired cushion appearance, these pillow-like chambers are stabilized by filling them with the second protuberances of the at least one middle ply. Here, different alternatives are possible. On the one hand, each pillow-like chamber could only be filled by one single second protuberance of the middle ply. However, it is also possible to provide smaller sized second protuberances in the middle ply so as to fill one pillow-like chamber in the top ply by a plurality of second protuberances. In order to improve the stabilizing effect, it is essential that the stabilizing second protuberances are not too far remote from the edge portion of the pillow-like chambers. It has been found that, when rolling the product, the second protuberances of the middle ply tend to tilt and lose their desired stabilizing effect if they are given sufficient space to move aside and tilt when pressure is applied on the pillow-like chambers during winding up the product. Therefore, the second protuberances are preferably arranged in such number or configuration that individual second protuberances cannot un-obstructedly tilt and lose their stabilizing effect.

Preferably, the pillow-like chambers are at least partially filled with functional substances, like lotions, cleaning substances, hardening agents or the like. Such functional substances can be selected according to the desired field of application of the fibrous product and its desired reversibility. Further, such functional substances have the further effect to provide an additional stabilizing effect to the pillow-like chambers. The above-described reversibility can be further improved in that such functional substances are only effective on one side of the product to support the desired cleaning function, skin-caring function or abrasive cleaning function. Such functional substances can be best introduced into the pillow-like chambers by applying them to the at least one middle ply before or after embossing it and combining it to the at least one top ply. Comparable to the use of applicator rolls for adhesives or dyes, such functional substances are applied to the one side of the at least one middle ply which, in the inventive fibrous product faces the at least one top ply.

In order to clearly distinguish both sides of the inventive fibrous product such functional substances may be mixed with colours. By doing so the consumer will realize that the inventive fibrous product has two different sides wherein onto one side a specific functional substance is applied. Consequently, the inventive fibrous product is further characterized by a two-sidedness which is visible to the consumer.

Preferably, the embossed areas of the bottom ply of the fibrous product comprise embossed protuberances which project in a direction away from the at least one middle ply. In other words, the embossed protuberances project outwardly of the product. This makes the bottom surface harder than in case that the embossing protuberances would be directed to the inside of the product. A harder bottom surface might be suitable to provide a product with a two-sidedness with a soft absorbing top surface and a harder bottom surface. Further, the preferred orientation of the embossed protuberances to the outside of the product improves the visual distinction between the embossed areas and the non-embossed areas of the bottom ply.

However, the embossed areas of the bottom ply of the fibrous product may also comprise protuberances which project in a direction towards the at least one middle ply. In other words, the embossed protuberances project inwardly of the product. This makes the bottom surface softer than in case that the embossing protuberances would be directed to the outside of the product.

The method for producing an inventive fibrous product comprises the steps of:
- directing the at least one top ply into the nip of a first embossing station with a first embossing roll and a first counter-roll;
- directing the at least one middle ply into the nip of a second embossing station with a second embossing roll and a second counter-roll, wherein the second embossing roll is synchronized with the first embossing roll;
- generating a subunit by combining on the first embossing roll the at least one top ply and the at least one middle ply such that the second embossing protuberances of the at least one middle ply nest into pillow-like chambers formed between the first embossing protuberances of the at least one top ply;
- applying adhesive to the subunit at the surface of the at least one middle ply;
- directing the at least one bottom ply into the nip of a third embossing station with a third embossing roll and a third counter roll; wherein the third embossing roll is synchronized with the first embossing roll and second embossing roll; and
- combining the subunit and the at least one bottom ply in the nip between the first embossing roll and a marrying roll.

This is a relatively simple process for generating a complex product with three distinct plies. When applying adhesive to the subunit of middle ply and top ply, this is done after generating the subunit and before combining the subunit and the bottom ply in the nip between the first embossing roll and a marrying roll. Consequently, the subunit is arranged around the first embossing roll when applying adhesive. Therefore, the adhesive is applied to the middle ply where it faces the at least one bottom ply. Further, the adhesive is mainly applied to the highest projections of the first embossing roll which correspond to the first protuberances at least partially surrounding the pillow-like chambers. Because of its wickability, the adhesive penetrates the at least one middle ply and effects adhesive ply bonding between top ply, middle ply and bottom ply at the same positions. The synchronized operation of the three embossing stations makes it possible to place the second protuberances inside the pillow-like chambers at least partially surrounded by the first protuberances. Preferably, the bonding areas are placed into the non-embossed areas of the bottom ply.

The second counter roll is preferably a steel roll. Such a steel/steel embossing according to a so-called Matched Steel Embossing can be used to increase the stabilizing effect of the second embossing protuberances in that they are higher compressed than in case of a steel/rubber embossing station which gives rise to a better stabilizing effect of the second embossing protuberances within the pillow-like chambers of the at least one top ply.

Preferably, the method further comprises the step of applying a functional agent to the at least one middle ply before embossing the at least one middle ply. Such functional agent can be brought to that surface of the middle ply which, in the inventive fibrous product, faces the top ply so that the functional agent at least partially fills the pillow-like chambers formed between top ply and middle ply.

According to a preferred embodiment, the method further comprises the step of applying colour to the at least one middle ply before generating the subunit by combining top ply and middle ply. Such colour on the middle ply shining through the fibrous product can be used to improve the aesthetic appearance of the product. Preferably, the colour is applied toward the at least one middle ply on the second embossing station. This leads to coloured top surfaces of the second protuberances.

The device for manufacturing an inventive fibrous product comprises a first embossing station with a first embossing roll and a first anvil roll, a second embossing station with a second embossing roll and a second anvil roll, the second anvil roll being a rubber roll or a steel roll, a glueing deck with an applicator roll running against the first embossing roll, a third embossing station comprising a third embossing roll and a third anvil, and a marrying roll running against the first embossing roll. The first embossing roll, second embossing roll and third embossing roll are adapted to run in register. This is a relatively simple device which can be used to emboss the at least one top ply, to emboss the at least one middle ply, to combine the at least one top ply and the at least one middle ply in a nested configuration, to apply adhesive to the at least one middle ply, and to combine the subunit such generated with a bottom ply in the nip between the first embossing roll and a marrying roll. In order to realize the desired nested configuration with second embossing protuberances of the at least one middle ply projecting into the pillow-like chambers of the at least one top ply, the first embossing station and second embossing station have to run in register such that the positional relationship of the first embossing protuberances and the second embossing protuberances can be predetermined in the final product. Further, the third embossing roll is also in register with the first (and second) embossing roll, so that the non-embossed areas of the bottom ply are in register with the top ply and the middle ply.

Preferably, the device further comprises an application deck with a second applicator roll positioned upstream of the second embossing station. Such application deck can be used to apply functional agents to the at least one middle ply.

### Brief Description of the Drawings

In the following, embodiments of the invention will be described in detail based on several schematic drawings in which:
- Fig. 1: is a cross-sectional view of a web according to one embodiment of the invention;
- Fig. 2: schematically shows a device for manufacturing an inventive fibrous product; and
- Fig. 3a: shows a section of the surface of the first embossing roll;
- Fig. 3b: shows the corresponding section as given in Fig. 3a but on the surface of the second embossing roll; and
- Fig. 3c: shows a superposition of both surfaces of the embossing rolls as shown in Fig. 3a and 3b in order to visualize the position of embossing protuberances formed in the middle ply within pillow-like chambers formed in the embossed top ply.

### Detailed Description of Preferred Embodiments

In the following, embodiments of the invention will be described in detail with reference to the drawings. Throughout the drawings, the same elements will be denoted by the same reference numerals.

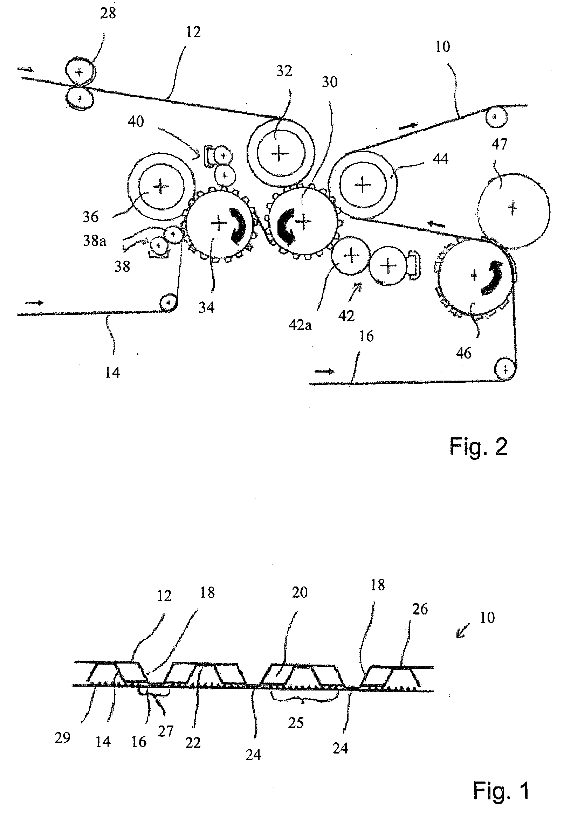

Fig. 1 shows an example of an inventive fibrous product generally denoted by reference numeral 10. It consists of a top ply 12, a middle ply 14 and a bottom ply 16. Top ply, middle ply or bottom ply could be multi-ply webs, respectively. However, if such is the case, such individual plies are not treated separately which means that a two-ply bottom ply is commonly processed in the device as described later with reference to Fig. 2.

Top ply 12 is provided with an embossing pattern forming first protuberances 18 which delimit pillow-like chambers 20. The first protuberances 18 are preferably of elongated shape, like lines which can be straight or curved and can even form closed geometries. However, it is preferred that the pillow-like chambers 20 are not fully surrounded by the first protuberances so that trapped air can escape in the course of the embossing process. Additionally, the top ply 12 can be provided with a micro-embossing pattern (not shown in Fig. 1). In this context micro-embossing should refer to a dot density of more than 30 dots per cm².

The at least one middle ply 14 is also embossed and is provided with second embossing protuberances 22 which are arranged and sized so as to nest into the pillow-like chambers 20 of the at least one top ply 12. In the specific example as shown in Fig. 1, the cross-sectional view shows only one single second embossing protuberance 22 per pillow-like chamber 20. However, it should be emphasized that there can be a plurality of second embossing protrusions 22 nesting into one single pillow-like chamber 20.

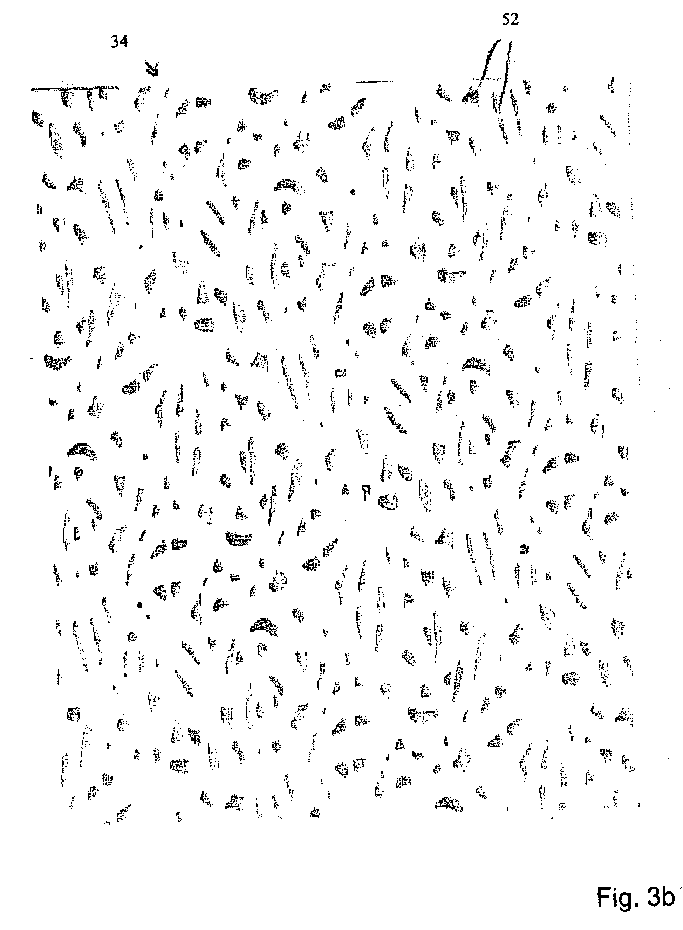

The second embossing protuberances have a cross-sectional size at their top of between 0.2cm² and 0.8cm². The cross-sectional geometry of the second embossing protuberances can be selected freely among technically feasible shapes like protuberances with a top surface shaped as a triangle, square, circle or star just to give a few examples of basic geometries. Besides such simple geometries, more complex geometries specifically adapted to the shape of the pillow-like chambers can be selected as can be seen with reference to Fig. 3b showing the cross-sectional shape of the second embossing protuberances for a specific example.

The second embossing protuberances serve to stabilize the pillow-like chambers so that pillow-like chambers of a considerable size can be realized while such large pillow-like chambers still do not collapse to a considerable extent. The size of such pillow-like chambers can be selected between 0.2cm² to 3cm² and preferably between 0.3cm² and 1cm². The first embossing protuberances surrounding the pillow-like chambers have a thickness between 0.4 and 1mm and preferably between 0.4 and 0.8mm.

The at least one bottom ply 16 is provided with embossed areas 25 and non-embossed areas 27. The embossed areas 25 can be provided with micro-embossed protrusions 29 which is schematically shown in Fig. 1. The bottom layer seals the fibrous product 10 in a way to finally form the pillow-like chambers 20 acting as cushions. The ply bonding between top ply 12, middle ply 14 and bottom ply 16 is achieved by means of adhesive at positions 24 which are within non-embossed areas 27. In other words, the three plies of the fibrous product are adhesively bonded together at identical positions. The non-embossed areas of the bottom ply can be of an elongate shape having a relatively small width which can be between 0.1mm and 30mm. In general, the width ranges between 0.1 and 30mm, preferably between 0.1 and 20mm, and most preferably between 0.1 and 15mm. Since the bonding between the plies is at the position of the first protuberances 18 of the top ply, the non-embossed areas of the bottom ply follow the design provided by the position of the first embossing protrusions which essentially surround the cushions 20 of the first ply. In such a way, the embossing pattern of the top ply can be mirrored to the bottom ply with the difference that, at the bottom ply, the embossed parts of the top ply are the unembossed areas.

Further, it is possible to provide the bottom ply with second non-embossed areas separate to the above-described (first) non-embossed areas. Such second non-embossed areas can be freely selected to provide a special motive element. Further, the second non-embossed areas can be selected to influence the functional behaviour of the bottom ply, namely to provide additional areas which are non-embossed and have a higher perceived smoothness.

Another possibility to influence the behaviour of the bottom ply is the direction of the embossing protrusions. This can be directed to the inside of the three ply product as is schematically shown in Fig. 1. However, it is also possible to direct the embossing protrusions to the outside of the product so that the embossed protrusions of the top ply extend outwardly from the base surface layer of the bottom ply.

The inventive fibrous product of Fig. 1 should preferably be manufactured by a process whereby the at least one top ply and the at least one middle ply are embossed in such a way that, when combining together top ply and middle ply, the second embossing protuberances of the at least one middle ply are accurately positioned at defined desired positions within the pillow-like chambers 20 formed in the at least one top ply. This requires an embossing process in which the at least one top ply and the at least one middle ply are embossed in a synchronized manner in order to safeguard the desired geometrical arrangement. Further, the bottom ply is also synchronized to the top ply and middle ply. Preferably, the three plies are bonded together at non-embossed areas of the bottom ply. This improves the aesthetical appearance of the bottom ply because the embossed protuberances are not flattened at specific positions. This would be the case if the plies were bonded together in embossed areas of the bottom ply.

In order to further improve the aesthetical appearance of the product, the plies might have a different base colour or the middle ply might be provided with colour at the top surfaces 26 of the second embossing protuberances. Further, the pillow-like chambers might be at least partially filled with active agents like lotions, cleaning agents or hardening substances.

As can be seen from the schematic representation of the product in Fig. 1, the two sides to the product are clearly different. This high reversibility of the product makes it possible to provide e.g. a cleaning side which could be the top surface of the product and a polishing side which could be the bottom surface of the product. In that respect, it becomes clear that the terms "top ply", "top surface", "bottom ply" or "bottom surface" are selected arbitrarily for such a product.

The existence of the cushions formed by the pillow-like chambers generates the visual appearance of soft cushions and also improves the perceived softness of the product which may have high handfeel values. Moreover, the product has a high mechanical stability and especially a high tear resistance.

Fig. 2 describes the process used for manufacturing product 10. The top ply 12 is optionally pre-embossed in a first pre-embossing station 28 and directed into the nip of a first embossing station consisting of a first embossing roll 30 and an anvil roll 32. Embossing roll 30 is preferably made of metal especially steel, or hard plastics materials or hard rubber. In case of plastics, very hard plastic material is preferred, alternatively a resin material is also possible. Preferably, the anvil roll is made of rubber like EPDM or NBR (acrylnitrile-butadien rubber), paper or steel. It preferably has a hardness between 20 Shore A and 85 Shore A, preferably between 35 Shore A and 60 Shore A and most preferably a hardness of about 45 Shore A. In the nip between the first embossing roll 30 and anvil roll 32, the at least one first ply 12 receives a first embossing pattern with first protuberances 18 as schematically shown in Fig. 1.

The at least one middle ply 14 is introduced into the nip of a second embossing roll 34 and an anvil roll 36 which form a second embossing station. As regards the possible materials for the embossing roll 34 and anvil roll 36, the same materials as described above with reference to the first embossing roll 30 and the first anvil roll 32 also apply. In the second embossing station consisting of the second embossing roll 34 and the second anvil roll 36, the at least one middle ply 14 is provided with second embossing protuberances 22 as schematically shown in Fig. 1. In addition to this, the device can further be provided with an application device 38 including an applicator roll 38a for applying functional substances to the at least one middle ply 14. Such applicator devices are well-known in the art and commonly used for the application of adhesives or coloured substances.

Further, the device might be provided with an application device 40 which runs against the second embossing roll 34 and applies a coloured substance toward the protrusions formed in the second embossing roll 34.

The first embossing roll 30 and the second embossing roll 34 are operated in register which means that both rolls have to be operated in a synchronized manner such that the embossed middle ply 14 leaving the second embossing roll 34 can be directed in a predetermined positional relationship onto the at least one first ply 12 still on the surface of the first embossing roll 30. In this way, the at least one first ply 12 and the at least one middle ply 14 are combined together to form a subunit. The second embossing protuberances 22 of the middle ply nest into the pillow-like chambers 20 formed by the embossing pattern of the top ply 12. The next method step is carried out at the glueing deck 42 including a glue applicator roll 42a running against the first embossing roll 30. In this conventional glueing deck 42, adhesive is applied.

For laminating together the single webs of material, different types of adhesive can be used. Suitable adhesives are, inter alia, glue on the basis of starch or modified starch like for example methyl cellulose or carboxylized methyl cellulose and adhesively acting polymers on the basis of synthetic resins, caoutchouc, polypropylene, polyisobutylene, polyurethane, polyacrylates, polyvinylacetat or polyvinyl alcohol. Such adhesives can also contain colouring agents in order to improve the optical appearance of the finished products. Frequently, water based glues are used for laminating together paper layers.

An option to increase the visibility or to enhance the visible appearance of the product is to provide coloured adhesive.

Further, a marrying roll 44 runs against the first embossing roll 30 such that the subunit consisting of the at least one top ply 12, the at least one middle ply 14 and the glue applied to a part of the surface of the at least one middle ply can be brought in contact with bottom ply 16 which is laminated to the middle ply in the nip between the first embossing roll 30 and the marrying roll 44. Ply bonding between the at least one middle ply and the at least one top ply is achieved such that part of the adhesive applied in glueing deck 42 penetrates the at least one middle ply due to its wicking capability and effects ply bonding between middle ply and top ply as well.

The bottom ply 16 is embossed in the nip between the third embossing roll 46 and the corresponding anvil roll 47 which form a third embossing station. As regards the possible materials for the embossing roll 46 and anvil roll 47, the same materials as described above with reference to the first embossing roll 30 and the first anvil roll 32 also apply. In the third embossing station consisting of the third embossing roll 46 and the third anvil roll 47, the at least one bottom ply 16 is provided with third embossing protuberances as schematically shown in Fig. 1. The surface of the embossing roll is shaped such that it generates an embossing pattern on the at least one bottom ply 16 consisting of embossed areas 25 and non-embossed areas 27 (see Fig. 1). In the example of Fig. 1 product 10is characterized by the fact that all bonding positions 24 at which the three plies are bonded together are situated in non-embossed areas of the at least one bottom ply 16. Due to this fact the third embossing roll 46 also runs in register with the first embossing roll 30 and second embossing roll 34. After leaving the embossing station, the at least one bottom ply 16 is directed into the nip between the first embossing roll 30 and the marrying roll 44 where the three plies are bonded together.

In case that the bottom ply is a multi-ply structure, the plies might be combined by means of a mechanical ply bonding.

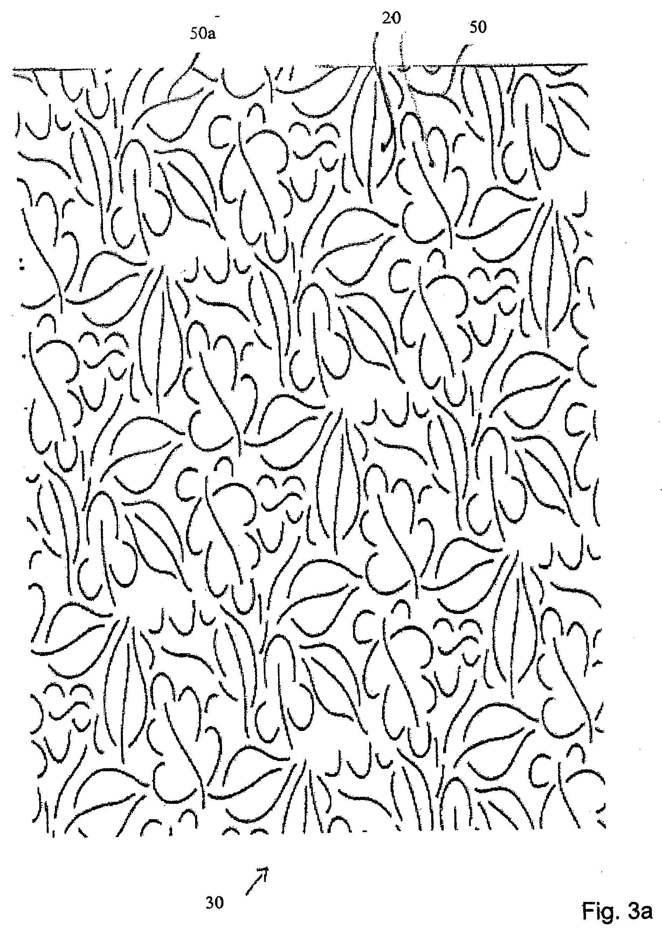

Fig. 3a gives one specific example of part of the embossing surface of an embossing roll 30 for embossing the at least one top ply. The embossing roll is provided with numerous linear protrusions 50 which are curved and have a varying thickness like the linear protrusion 50a given as an example. The linear protrusions 50 on the embossing surface of the first embossing roll 30 serve to form linear embossing protuberances in the at least one top ply which surround pillow-like chambers like those exemplified by reference numeral 20 as used in Fig. 1 as well. Such pillow-like chambers 20 have a considerable size as can be seen from the pattern as shown in Fig. 3a which can be considered to show the size of such chambers on a 1:1 scale.

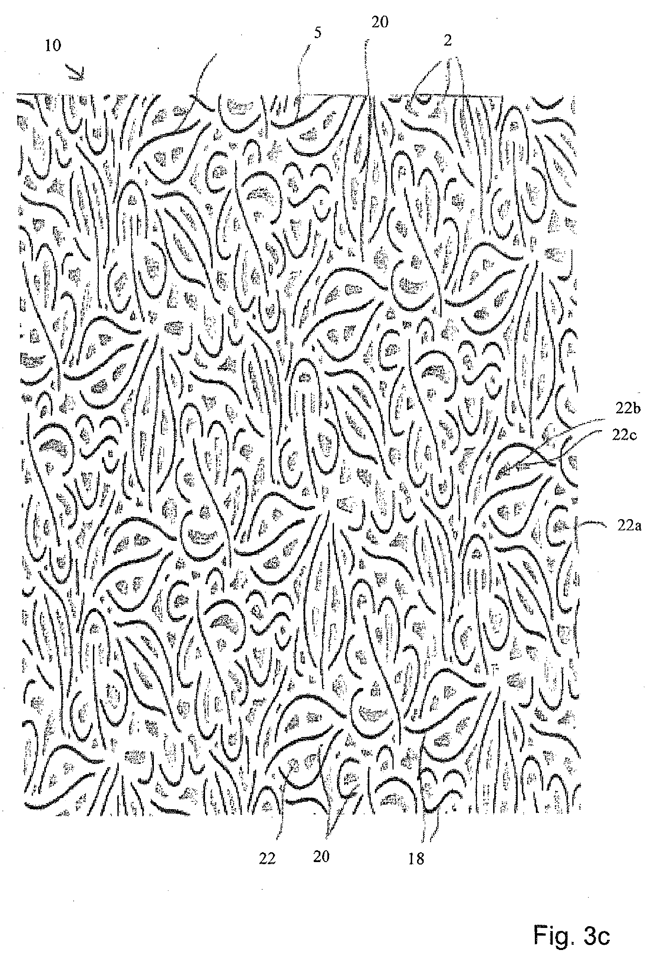

Fig. 3b shows part of the surface of the second embossing roll 34 for embossing the at least one middle ply. The frame as shown in Fig. 3b corresponds to that as shown in Fig. 3a which becomes apparent from Fig. 3c which shows a superposition of Figs. 3a and 3b. Such superposition is possible since the first embossing roll 30 and the second embossing roll 34 are running in register. As shown in Fig. 3b, the surface of the roll is provided with protrusions 52 which can have very different cross-sectional shapes as can be seen from Fig. 3b. The protrusions 52 generate the second embossing protuberances 22 of the at least one middle ply which nest into the pillow-like chambers 20 of the at least one top ply. The second embossing protuberances and, correspondingly, the protrusions 52 on the second embossing roll are arranged such as to stabilize the pillow-like chambers 20, which follows from Fig. 3c showing a superposition of Figs. 3a and 3b.

Fig. 3c is an artificial drawing because there is no surface of an embossing roll having both the embossing protrusions 50 and 52. Therefore, Fig. 3c might be better interpreted as the schematic view onto the top surface of an inventive fibrous product 10 showing pillow-like chambers 20 as well as coloured second embossing protuberances 22 shining through. The first embossing protuberances 18 are represented by black lines in order to increase the visibility of the graphic representation according to Fig. 3c. To some extent, the first embossing protuberances 18 could be made more visible by using coloured adhesive for the ply bonding of the three plies which is carried out along the first embossing protuberances 18.

It can be further seen from Fig. 3c, that single pillow-like chambers can be either stabilized by a single second embossing protrusion like exemplified by reference numeral 22a or by a plurality of second embossing protuberances like exemplified by the second embossing protuberances 22b, 22c.

The inventive product combines a high mechanical strength with good handfeel values and an improved bulk. The pillow-like chambers are both visible and contribute to the overall haptic appearance of the product. Finally, the product has a high reversibility which is especially useful in case of its use as a household tissue which can be provided with a micro-embossed polishing side corresponding to the at least one bottom layer and an opposite side which can be used for scrubbing with active chambers filled with lotions or washing substances provided inside the pillow-like chambers.

The inventive product has a good optical appearance and the design as shown on the top ply can also be repeated on the bottom ply but in a reverse manner so that the embossed protuberances of the top ply may correspond to a non-embossed linear shape of the bottom ply. Depending on the orientation of the third embossing protuberances of the bottom ply, the aesthetical appearance of the bottom ply can be further improved.

## Claims

1. Fibrous product, especially tissue paper product, non-woven product or a hybrid thereof the fibrous product preferably being a hygiene and cleaning product, wherein the fibrous product comprises
- at least one top ply (12) with a first embossing pattern,
- at least one middle ply (14) embossed with second embossing protuberances,
- at least one bottom ply (16) being bonded to both the at least one top ply (12) and the at least one middle ply (14) at bonding regions (24) **characterized in that**
- the first embossing pattern of the at least one top ply (12) forms pillow-like chambers (20) at least partially surrounded by the first embossing protuberances (18);
- the at least one middle ply (14) is embossed in register with the at least one top ply (12) so that second embossing protuberances (22) of the at least one middle ply (14) nest into the pillow-like chambers (20) of the at least one top ply (12); and
- the at least one bottom ply (16) is in register with the at least one top ply (12; wherein
- the at least one bottom ply (16) comprises non-embossed areas and embossed areas preferably provided with a micro-embossing pattern; and
- whereby the unembossed areas of the bottom ply (16) are in register with the top ply (12) and the middle ply (14).

2. Fibrous product according to claim 1, whereby the bottom ply (16) is unembossed at the bonding regions (24).

3. Fibrous product according to claim 1 or 2, **characterized in that**
the non-embossed areas are of an elongate shape having a width between 0.1 and 30mm, preferably between 0.1 and 20mm and most preferably between 0.1 and 15mm.

4. Fibrous product according to any of the preceding claims, the bottom ply further comprising second non-embossed areas.

5. Fibrous product according to any of the preceding claims,
**characterized in that**
the ratio between the non-embossed areas and the embossed areas of the bottom ply is between 5% and 70%, preferably between 10% and 60% and especially 15% and 50% for the non-embossed areas and 30% to 95%, preferably 40% to 90% and especially 50% to 85% for the embossed areas.

6. Fibrous product according to any of the preceding claims,
**characterized in that**
two bottom plies (16) are bonded together by means of mechanical ply bonding or by lamination.

7. Fibrous product according to any of the preceding claims,
**characterized in that**
the at least one top ply (12), the at least one middle ply (14), and the at least one bottom ply (16) are adhesively bonded together at the bonding regions (24).

8. Fibrous product according to any of the preceding claims,
**characterized in that**
the first embossing protuberances (18) of the at least one top ply comprise linear or dotted protuberances essentially delimiting the pillow-like chambers, the pillow-like chambers having a surface area between 0.2cm² and 3cm² and preferably between 0.3cm² and 1cm².

9. Fibrous product according to claim 7, wherein the pillow-like chambers of the at least one top ply are stabilized by at least one second embossing protuberance of the at least one middle ply, the second embossing protuberances having a cross-sectional area at the top of between 0.2cm² and 0.8cm².

10. Fibrous product according to claim 8 or 9, wherein the pillow-like chambers are at least partially filled with a functional substance, like a lotion, cleaning substance, hardening agent or the like.

11. Fibrous product according to any of the preceding claims, wherein the embossed areas comprise embossed protuberances which project in a direction away from the at least one middle ply.

12. Method of producing a fibrous product (10) according to any of the preceding claims, comprising the step:
(a) directing the at least one top ply (12) into the nip of a first embossing station with a first embossing roll (30) and a first counter roll (32); and
**characterized by** the further steps:
(b) directing the at least one middle ply (14) into the nip of the second embossing station with a second embossing roll (34) and a second counter roll (36); wherein the second embossing roll (34) is synchronized with the first embossing roll (30);
(c) generating a subunit by combining on the first embossing roll (30) the at least one top ply (12) and the at least one middle ply (14) such that the second embossing protuberances (22) of the at least one middle ply (14) nest into the pillow-like chambers (20) formed between first embossing protuberances (18) of the at least one top ply (12);
(d) applying adhesive to the subunit at the surface of the at least one middle ply (14);
(e) directing the at least one bottom ply (16) into the nip of a third embossing station with a third embossing roll and a third counter roll; wherein the third embossing roll is synchronized with the first embossing roll and second embossing roll; and
(f) combining the subunit and at least one bottom ply (16) in a further nip between the first embossing roll (30) and a marrying roll (44).

13. Method according to claim 12, further comprising the step of:
- applying a functional agent, like a lotion cleaning substance, hardening agent or the like to the at least one middle ply (14) before step (b).

14. Method according to claim 12 or 13, further comprising the step of
- applying colour to the at least one middle ply (14) before step (c).

## Patentansprüche

1. Faserprodukt, insbesondere ein Tissue-Papierprodukt, ein Vliesprodukt oder einen Hybrid daraus, wobei das Faserprodukt vorzugsweise ein Hygiene- und Reinigungsprodukt ist und das Faserprodukt aufweist
- mindestens eine obere Lage (12) mit einem ersten Prägemuster,
- mindestens eine mittlere Lage (14), die mit zweiten Prägevorsprüngen geprägt ist,
- mindestens einer untere Lage (16), die in Verbindungsbereichen (14) sowohl mit der mindestens einen oberen Lage (12) als auch der mindestens einen mittleren Lage (14) verbunden ist
**dadurch gekennzeichnet, dass**
- das erste Prägemuster der mindestens einen oberen Lage (12) kissenartige Kammern (20) ausbildet, die zumindest teilweise durch die ersten Prägevorsprünge (18) umgeben sind;
- die mindestens eine mittlere Lage (14) in Ausrichtung mit der mindestens einen oberen Lage (12) geprägt ist, sodass zweite Prägevorsprünge (22) der mindestens einen mittleren Lage (14) in den kissenartigen Kammern (20) der mindestens einen oberen Lage (12) nisten; und
- die mindestens eine untere Lage (16) mit der mindestens einen oberen Lage (12) in Ausrichtung ist; wobei
- die mindestens eine untere Lage (16) nicht geprägte Bereiche und geprägte Bereiche, die vorzugsweise mit einem Mikro-Prägemuster bereitgestellt sind, aufweist; und
- die nicht geprägten Bereiche der unteren Lage (16) mit der oberen Lage (12) und der mittleren Lage (14) in Ausrichtung sind.

2. Faserprodukt nach Anspruch 1, bei dem die untere Lage (16) in den Verbindungsbereichen (24) nicht geprägt ist.

3. Faserprodukt nach Anspruch 1 oder 2, **dadurch gekennzeichnet, dass**
die nicht geprägten Bereiche länglicher Form sind, die eine Breite zwischen 0,1 und 30 mm, vorzugsweise zwischen 0,1 und 20 mm und am bevorzugtesten zwischen 0,1 und 15 mm aufweisen.

4. Faserprodukt nach einem der vorstehenden Ansprüche, bei dem die untere Lage ferner zweite nicht geprägte Bereiche aufweist.

5. Faserprodukt nach einem der vorstehenden Ansprüche,
**dadurch gekennzeichnet, dass**
das Verhältnis zwischen den nicht geprägten Bereichen und den geprägten Bereichen der unteren Lage zwischen 5% und 70%, vorzugsweise zwischen 10% und 60% und insbesondere 15% und 50% für die nicht geprägten Bereiche und 30% bis 95%, vorzugsweise 40% bis 90% und insbesondere 50% bis 85% für die geprägten Bereiche ist.

6. Faserprodukt nach einem der vorstehenden Ansprüche,
**dadurch gekennzeichnet, dass**
zwei untere Lagen (16) mittels mechanischer Lagenbindung oder durch Laminierung miteinander verbunden sind.

7. Faserprodukt nach einem der vorstehenden Ansprüche,
**dadurch gekennzeichnet, dass**
die mindestens eine obere Lage (12), die mindestens eine mittlere Lage (14) und die mindestens eine untere Lage (16) bei den Verbindungsbereichen (24) haftend miteinander verbunden sind.

8. Faserprodukt nach einem der vorstehenden Ansprüche,
**dadurch gekennzeichnet, dass**
die ersten Prägevorsprünge (18) der mindestens einen oberen Lage lineare oder gepunktete Prägevorsprünge aufweisen, die im Wesentlichen die kissenartigen Kammern begrenzen, wobei die kissenartigen Kammern einen Flächenbereich zwischen 0,2 cm² und 3 cm² und vorzugsweise zwischen 0,3 cm² und 1 cm² aufweisen.

9. Faserprodukt nach Anspruch 7, bei dem die kissenartigen Kammern der mindestens einen oberen Lage durch mindestens einen zweiten Prägevorsprung der mindestens einen mittleren Lage stabilisiert sind, wobei die zweiten Prägevorsprünge eine Querschnittsfläche auf der Oberseite von zwischen 0,2 cm² und 0,8 cm² aufweisen.

10. Faserprodukt nach Anspruch 8 oder 9, bei dem die kissenartigen Kammern zumindest teilweise mit einer funktionellen Substanz gefüllt sind, wie zum Beispiel einer Lotion, einer Reinigungssubstanz, einem Härtungsmittel oder Ähnlichem.

11. Faserprodukt nach einem der vorstehenden Ansprüche, bei dem die geprägten Bereiche Prägevorsprünge aufweisen, die in einer Richtung weg von der mindestens einen mittleren Lage hervorstehen.

12. Verfahren zum Herstellen eines Faserprodukts (10) nach einem der vorstehenden Ansprüche, das den Schritt umfasst:
(a) Führen der mindestens einen oberen Lage (12) in den Spalt einer ersten Prägestation mit einer ersten Prägewalze (30) und einer ersten Gegenwalze (32); und
**gekennzeichnet durch** die weiteren Schritte:
(b) Führen der mindestens einen mittleren Lage (14) in den Spalt der zweiten Prägestation mit einer zweiten Prägewalze (34) und einer zweiten Gegenwalze (36), wobei die zweite Prägewalze (34) mit der ersten Prägewalze (30) synchronisiert ist;
(c) Erzeugen einer Untereinheit **durch** Kombinieren der mindestens einen oberen Lage (12) und der mindestens einen mittleren Lage (14) auf der ersten Prägewalze (30), sodass die zweiten Prägevorsprünge (22) der mindestens einen mittleren Lage (14) in den kissenartigen Kammern (20) nisten, die zwischen ersten Prägevorsprüngen (18) der mindestens einen oberen Lage (12) ausgebildet sind;
(d) Aufbringen eines Haftmittels auf der Untereinheit bei der Fläche der mindestens einen mittleren Lage (14);
(e) Führen der mindestens einen unteren Lage (16) in den Spalt einer dritten Prägestation mit einer dritten Prägewalze und einer dritten Gegenwalze, wobei die dritte Prägewalze mit der ersten Prägewalze und der zweiten Prägewalze synchronisiert ist; und
(f) Kombinieren der Untereinheit und mindestens eine untere Lage (16) in einem weiteren Spalt zwischen der ersten Prägewalze (30) und einer Verheiratungswalze (44).

13. Verfahren nach Anspruch 12, ferner mit dem Schritt:
- Aufbringen eines Funktionsmittels, wie zum Beispiel eine Lotion, eine Reinigungsubstanz, ein Härtungsmittel oder Ähnliches, auf die mindestens eine mittlere Lage (14) vor dem Schritt (b).

14. Verfahren nach Anspruch 12 oder 13, ferner mit dem Schritt
- Aufbringen von Farbe auf die mindestens eine mittlere Lage (14) vor Schritt (c).

## Revendications

1. Produit fibreux, en particulier produit du type papier tissu, produit du type non-tissé ou produit hybride de ces derniers, le produit fibreux étant de préférence un produit d'hygiène et un produit de nettoyage, ledit produit fibreux comprenant :
- au moins une couche supérieure (12) comportant un premier motif de gaufrage :
- au moins une couche médiane (14) gaufrée comportant des deuxièmes protubérances de gaufrage ;
- au moins une couche de base (16) reliée aux deux couches, une couche supérieure (12) au minimum unique et une couche médiane (14) au minimum unique dans des zones de liaison (24) :
**caractérisé en ce que**
- le premier motif de gaufrage de la couche supérieure (12) au minimum unique forme des espaces (20) analogues à des coussinets au moins partiellement entourés par les premières protubérances de gaufrage (18) ;
- la couche médiane (14) au minimum unique est gaufrée en correspondance exacte avec la couche supérieure (12) au minimum unique de telle manière que les secondes protubérances de gaufrage (22) de la couche médiane (14) au minimum unique se logent dans les espaces (20) analogues à des coussinets de la couche supérieure (12) au minimum unique ;
- la couche de base (16) au minimum unique est en correspondance avec la couche supérieure (12) au minimum unique ; et
- la couche de base (16) au minimum unique présente des zones non gaufrées et des zones gaufrées dotées de préférence d'un motif de micro-gaufrage ; et
- grâce à quoi les zones non gaufrées de la couche de base (16) sont en concordance exacte avec la couche supérieure (12) et avec la couche médiane (14).

2. Produit fibreux selon la revendication 1, la couche de base (16) n'étant pas gaufrée au niveau des zones de liaison (24).

3. Produit fibreux selon la revendication 1 ou 2
**caractérisé en ce que**
les zones non gaufrées ont une forme oblongue et la largeur est comprise entre 0,1 et 30 mm, de préférence comprise entre 0,1 et 20 mm et le plus préférablement comprise entre 0,1 et 15 mm.

4. Produit fibreux selon l'une quelconque des revendications qui précèdent, la couche de base comprenant en outre des deuxièmes zones non gaufrées.

5. Produit fibreux selon l'une quelconque des revendications qui précèdent **caractérisé en ce que**
le rapport entre les zones non gaufrées et les zones gaufrées de la couche de base est compris entre 5 % et 70 %, de préférence compris entre 10 % et 60 % et en particulier compris entre 15 % et 50 % pour les zones non gaufrées et compris entre 30 % et 95 %, de préférence compris entre 40 % et 90 % et en particulier compris entre 50 % et 95 % pour les zones gaufrées.

6. Produit fibreux selon l'une quelconque des revendications qui précèdent **caractérisé en ce que**
deux couches de base (16) sont reliées entre elles au moyen de liaison mécanique des couches ou par lamellage.

7. Produit fibreux selon l'une quelconque des revendications qui précèdent **caractérisé en ce que**
la couche supérieure (12) au minimum unique, la couche médiane (14) au minimum unique et la couche de base (16) au minimum unique sont reliées entre elles par adhésif au niveau des zones de liaison (24).

8. Produit fibreux selon l'une quelconque des revendications qui précèdent **caractérisé en ce que**
les premières protubérances de gaufrage (18) de la couche supérieure au minimum unique comportent des protubérances linéaires ou ponctuelles qui délimitent essentiellement les espaces analogues à des coussinets ayant une surface comprise entre 0,2 cm² et 3 cm² et de préférence entre 0,5 cm² et 1 cm².

9. Produit fibreux selon la revendication 7 dans lequel les espaces analogues à des coussinets de la couche supérieure au minimum unique sont stabilisées par au moins une deuxième protubérance de gaufrage de la couche médiane au minimum unique, les deuxièmes protubérances de gaufrage ayant une surface de section transversale au sommet comprise entre 0,2 cm² et 0,8 cm².

10. Produit fibreux selon la revendication 8 ou 9 dans lequel les espaces analogues à des coussinets sont au moins partiellement remplis d'une substance fonctionnelle, telle qu'une lotion, une substance de nettoyage, un agent de durcissement ou d'une substance similaire.

11. Produit fibreux selon l'une quelconque des revendications qui précèdent dans lequel les zones gaufrées comportent des protubérances gaufrées qui font saillie dans une direction s'écartant de la couche médiane au minimum unique.

12. Procédé de fabrication d'un produit fibreux (10) selon l'une quelconque des revendications qui précèdent, comportant l'opération consistant à :
(a) diriger la couche supérieure (12) au minimum unique dans l'entrefer d'un premier poste de gaufrage comportant un premier rouleau de gaufrage (30) et un premier rouleau antagoniste (32) ; et
**caractérisé par** les opérations suivantes :
(b) diriger la couche médiane (14) au minimum unique dans l'entrefer du deuxième poste de gaufrage comportant un deuxième rouleau de gaufrage (34) et un deuxième rouleau antagoniste (36), le deuxième rouleau de gaufrage (34) étant synchronisé avec le premier rouleau de gaufrage (30) ;
(c) réaliser un sous-ensemble en combinant sur le premier rouleau de gaufrage (30) la couche supérieure (12) au minimum unique et la couche médiane (14) au minimum unique de telle manière que les deuxièmes protubérances de gaufrage (22) de la couche médiane (14) au minimum unique se logent dans les espaces (20) analogues à des coussinets formés entre les premières protubérances de gaufrage (18) de la couche supérieure (12) au minimum unique ;
(d) appliquer de l'adhésif sur le sous-ensemble sur la surface de la couche médiane (14) au minimum unique ;
(e) diriger la couche de base (16) au minimum unique dans l'entrefer d'un troisième poste de gaufrage comportant un troisième rouleau de gaufrage et un troisième rouleau antagoniste ; le troisième rouleau de gaufrage étant synchronisé avec le premier rouleau de gaufrage et avec le deuxième rouleau de gaufrage ; et
(f) combiner le sous-ensemble et au moins une couche antagoniste (16) dans un entrefer supplémentaire situé entre le premier rouleau de gaufrage (30) et un rouleau de mariage (44).

13. Procédé selon la revendication 12 comprenant en outre l'opération consistant à :
- appliquer un agent fonctionnel tel qu'une substance de nettoyage du type lotion, un agent de durcissement ou un agent similaire sur la couche médiane (14) au minimum unique avant l'opération (b).

14. Procédé selon la revendication 12 ou 13 comprenant en outre l'opération consistant à :
- appliquer de la couleur sur la couche médiane (14) au minimum unique avant l'opération (c).
